# EUROPEAN PATENT SPECIFICATION

(11) **EP 1 269 146 B1**
(45) Date of publication and mention of the grant of the patent: **20.06.2012**
(21) Application number: 01919469.5
(22) Date of filing: 05.03.2001
(51) Int. Cl.: G01N 3/00, G06N 3/12

(54) **METHOD AND APPARATUS FOR ALLOCATING PASSENGERS BY A GENETIC ALGORITHM**
VERFAHREN UND VORRICHTUNG ZUM ZUTEILEN VON INSASSEN DURCH EINEN GENETISCHEN ALGORITHMUS
PROCEDE ET APPAREIL D'AFFECTATION DE PASSAGERS PAR ALGORITHME GENETIQUE

(30) Priority: 03.03.2000 FI 20000502
(43) Date of publication of application: 02.01.2003
(73) Proprietor: Kone Corporation, 00330 Helsinki (FI)
(72) Inventor: TYNI, Tapio, FIN-05620 Hyvinkää (FI); YLINEN, Jari, FIN-05800 Hyvinkää (FI)
(74) Representative: Graf Glück Habersack Kritzenberger
(86) International application number: PCT/FI2001/000220
(87) International publication number: WO 2001/065231

(56) References cited:
- EP-A1- 0 897 891
- WO-A2-99/33741
- US-A- 5 932 852
- US-A- 6 000 504

## Description

The present invention relates to a method as defined in the preamble of claim 1 and to an apparatus as defined in claim 8 for the allocation of passengers to elevator cars.

When a passenger wishes to have a ride on an elevator, he/she will issue a call for an elevator by pressing a landing call button mounted at the floor. The control system of the elevator group receives the call for an elevator and tries to figure out which one of the elevators in the elevator group will be best able to serve the call. The activity is termed call allocation. The problem to be solved by allocation is how to find an elevators that will minimize a given cost factor. Allocation may aim at minimizing passengers' waiting time, passengers' traveling time, the number of times the elevator will stop or a combination of several cost factors weighted in different ways.

Traditionally, to establish which one of the elevators would be appropriate to serve a call, the reasoning is carried out individually for each case using complicated conditional structures. The final aim of this reasoning is to minimize a cost factor describing the operation of the elevator group, typically e.g. the call time or the average waiting time of the passengers. As the elevator group works in a complicated state space, the conditional structures are also complicated and they tend to have gaps, there appear situations in which the control is not functioning in an optimal way. Likewise, it is difficult to take the elevator group into consideration as a whole. A typical example of this is the traditional collective control, in which a landing call is served by the one of the elevators which is traveling in the direction toward the call at the closest distance from the calling floor. This simple optimization principle, however, leads to aggregation of the elevators, which means that the elevators are traveling in a front in the same direction, and therefore to a fall in the performance of the elevator group as a whole.

The US 5,382,761 discloses a call allocation method in an elevator group using destination call control, wherein the departure floor as well as the destination floor of a landing call are handled in the allocation procedure.

The US 5,932,852 discloses an allocation procedure under use of genetic algorithms.

The object of the invention is to achieve a new method and apparatus for the allocation of passengers by a genetic algorithm. The method of the invention is characterized by the characterization part of claim 1. The apparatus of the invention is characterized by the characterization part of claim 8. Advantageous embodiments of the invention are subject matter of the dependent claims. Preferred embodiments of the invention are subject-matter of the dependent claims.

Instead of allocation of landing calls, the solution of the invention concerns the allocation of passengers. Since in passenger allocation each passenger indicates his/her target floor and since the floor of departure is known on the basis of the location of the call input device, the passengers' intentions regarding the system are known unambiguously. Using this perfect basic data, the control system of the elevator group can try to find an elevator advantageous to the passenger, in other words, allocate passengers to elevator cars. In traditional allocation of up/down calls, the data obtained about passengers is imperfect and therefore, instead of passengers, calls are allocated, in other words, the system tries to find an advantageous elevator for the call.

The decision-making is based on genetic algorithms. At first, a set of alternative solutions, i. e. chromosomes are created, and the quality of these as an allocation decision is determined. Next, the set of alternative solutions is refined by genetic methods, including selection of representative solution alternatives for the next generation and as parents to descendants, generation of descendants, i. e. new solution alternatives, by cross-breeding the best solution alternatives with each other and/or by applying mutations, i. e. changes in the genes of descendants. For each descendant, it is necessary to determine a quality factor, whereupon it is possible to generate the next generation of solution alternatives or, if a termination criterion is fulfilled, the best alternative among the set of solutions is output as a solution to the problem. Genetic passenger allocation differs from earlier genetic methods above all in that, instead of traditional up/down calls, allocation is expressly concerned with passengers, i.e. deciding which elevator car is to serve each passenger, whereas in earlier methods the allocation decision determines which elevator car is to serve each landing call. This is possible because each passenger gives his/her destination floor via a signaling device while on the floor of departure, so that the data for each individual passenger are known in the elevator system. The elevator system must also inform each passenger as to the elevator to serve him/her. Once the passenger has been given this information, the elevator car suggested for him/her generally should not be subsequently changed.

One of the advantages of the solution of the invention is that the accurate information provided by passenger allocation and the method presented make it possible to improve the level of service offered to passengers. The system is also able to produce traffic statistics containing, among other things, passenger information and passengers' movements in the building, and to produce parameters describing passenger service, such as e.g. passenger waiting times, during normal operation.

In the following, the invention will be described in detail by the aid of one of its embodiments with reference to the drawings, wherein
- Fig. 1 illustrates the architecture of the system, showing the equipment comprised in the system,
- Fig. 2 illustrates the operation of passenger allocation, and
- Fig. 3 presents an example representing the coding of passengers to form chromosomes.

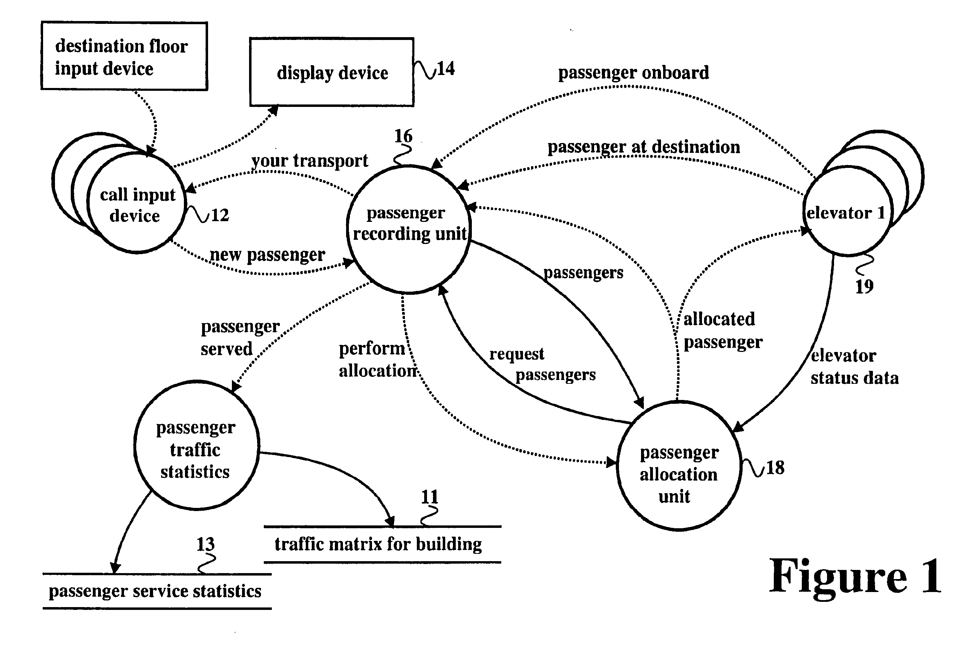

Fig. 1 illustrates the architecture of the system. When a passenger wishes to call an elevator, he/she indicates the desired destination floor via a call input device on his/her floor of departure. The call input device tells the passenger which elevator is going to serve him/her. In the following, the operation of the system will be described step by step. When the passenger indicates his/her destination floor via the call input device 12, the call input device generates from it a *"new passenger"* message, which is transmitted to the control system of the elevator group. The message contains the following data:
**Device identification + floor of departure + entry side + destination floor + exit side**

The message is processed in a passenger recording unit 16, which keeps records of passengers and passenger data. The recording unit includes in the arriving information an unambiguous passenger identifier, time and elevator data, and stores these data (bold text):
**passenger identifier + floor of departure + entry side + destination floor + exit side + time of arrival of passenger at floor of departure +** time of passenger's entrance into car + time of arrival of passenger at destination floor + elevator + car + estimated time of arrival of elevator car at floor of departure

At this stage, the fields given in normal text have not yet been defined. Having saved the data, the passenger recording unit 16 starts a passenger allocation procedure by sending the message *"perform allocation"*. The passenger allocation unit 18 asks the passenger recording unit 16 to give all passengers in the system together with the passenger data. Next, it starts a search to find an elevator car for each passenger not yet allocated. An *unallocated passenger* is a passenger for whom no elevator car has been assigned. Once the passenger allocation unit has decided which elevator car is to serve each unallocated passenger, it will send an *"allocated passenger"* message for each passenger to the passenger recording unit 16. The message contains information indicating the elevator car to serve the passenger:
**passenger identifier + elevator + car + estimated time of arrival of elevator car at floor of departure**

The passenger recording unit 16 updates the data regarding the elevator car reserved for serving the passenger in question. Thus, at this stage, the following facts concerning the passenger, given in bold text, are known:
**passenger identifier + floor of departure + entry side + destination floor + exit side + time of arrival of passenger at floor of departure +** time of passenger's entrance into car + time of arrival of passenger at destination floor **+ elevator + car + estimated time of arrival of elevator car at floor of departure**

The passenger recording unit 16 sends the call input device 12 a *"Your transport"* message, which tells the passenger via a display device 14 the elevator car to serve him/her and possibly an estimated time of arrival of the elevator:
**device identifier + passenger identifier + floor of departure + entry side + destination floor + exit side + elevator + car + estimated time of arrival of elevator car at floor of departure**

Data indicating which elevator car is going to serve the passenger is also transmitted to the elevator 19 having the car in question.

The elevator 19 keeps its own books about passengers. The elevator has two lists for passengers. One of the lists contains the passengers who are going to enter the car, and the other list contains the passengers currently in the car. A new allocated passenger is first added to the list of passengers waiting to enter the car. At the same time, the passenger's floor of departure is registered as a stopping floor along the route of the elevator. When the elevator stops at a floor, it goes through its two passenger lists. The passenger is transferred from the list of passengers wanting to enter the car to the list of passengers currently in the car if (a) the floor at which the elevator has stopped is the same as the passenger's floor of departure and (b) the elevator is able to continue in the direction toward the passenger's destination floor. In this case, the elevator 19 will send a *"passenger onboard"* message:
**Passenger identifier + time of entrance of passenger into car**

At the same time, the elevator sets the destination floor of the passengers having just entered the car as a future stopping floor in its service sequence.

The passenger recording unit updates the passenger's time of entrance into car with the data of the *"passenger onboard"* message. The facts known about the passenger are now as follows (bold text):
**passenger identifier + floor of departure + entry side + destination floor + exit side + time of arrival of passenger at floor of departure + time of passenger's entrance into car +** time of arrival of passenger at destination floor **+ elevator + car + time of arrival of elevator car at floor of departure**

The destination floors of passengers are treated in a similar way. When the elevator stops at a floor, it checks its list of passengers onboard the car. The passenger is removed from this list if the stopping floor is the same as the passenger's destination floor. The passenger has now reached his/her destination and the elevator sends a *"passenger at destination"* message:
passenger identifier + passenger's time of arrival at destination floor

The passenger recording unit updates the passenger's time of arrival at destination floor with the data of the "passenger at destination" message. Finally, the passenger recording unit removes the passenger from its own lists and sends information regarding the passenger to a statistics unit collecting statistics in a "passenger served" message, which thus contains complete updated passenger data:
passenger identifier + floor of departure + entry side + destination floor + exit side + time of arrival of passenger at floor of departure + time of passenger's entrance into car + time of arrival of passenger at destination floor + elevator + car + time of arrival of elevator car at floor of departure

Based on this information regarding individual passengers, it is possible to generate building-specific traffic statistics 11 to describe passenger traffic between different floors typically by the time of the day. This is difficult in a traditional system, where it is only possible to estimate the traffic components arriving at and departing from a floor from/in the up and down directions but not the traffic between floors with any accuracy. Likewise, the passenger data can be used to produce exact basic characteristics 13 describing the quality of service of the elevator group, typically by the time: passenger's waiting time, riding time and traveling time. In traditional control systems, these data, too, are inaccurate.

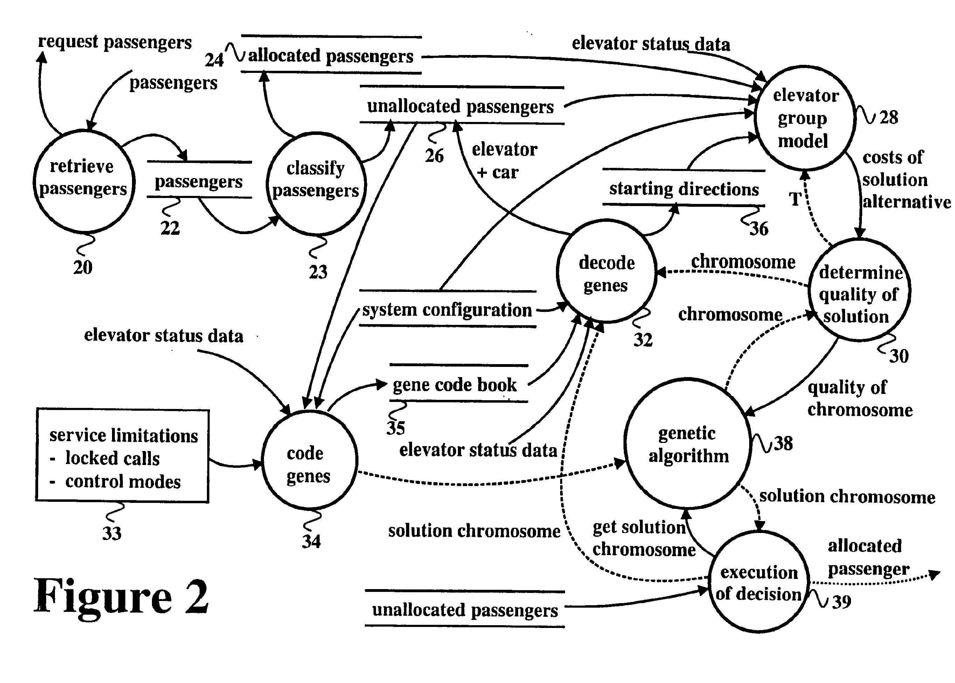

Fig. 2 illustrates the action of the passenger allocation system. First, the data for all passengers are read 20 into a specific local data storage 22. Next, the passengers are grouped 23 into allocated 24 and unallocated 26 passengers. For the allocated passengers, an elevator car has already been reserved, in other words, the system knows which elevator car is going to serve each passenger, whereas for the *unallocated passengers*, no elevator car has not yet been reserved. Both types of passenger data are input into a model 28 of the elevator group, which contains the rules of behavior of the elevators and basic information, such as speed, car sizes, number of elevators, etc. The fundamental idea is that when input to the model, each passenger has an elevator assigned for him/her, and the elevator model works out the quality 30 of the solution alternative, e.g. in terms of passenger waiting time, riding time or traveling time or a combination of these. As the passenger allocation system knows individual passengers, the above-mentioned characteristics can be computed very accurately in the elevator model.

Thus, when taken to the elevator group model, each passenger has an elevator car assigned for him/her. For allocated passengers, the elevator has been definitely fixed and cannot be changed, whereas for unallocated passengers, the genetic algorithm suggests different alternative elevator cars and, working according to its principle, finds for each unallocated passenger an elevator car that will serve the passenger in the best possible way in terms of a quality value. An encoding unit 34 comprised in the genetic algorithm adds one gene for each unallocated passenger to the chromosome structure of the genetic algorithm. At the same time, it checks whether there are any service limitations 33 concerning the floors of departure and destination by checking the settings for locked states of landing and car calls and sending inquiries to the control units of different control functions. When adding a gene, the gene encoding unit 34 also fills in a code book 35, which tells the type of the gene. For example, there is a need to fix a direction for an elevator standing unoccupied at a floor. It is difficult to decide beforehand in which direction it would be more advantageous for the elevator to start out to serve the passengers allocated to it. This problem is solved by including in the chromosome, in the case of an idle elevator, a gene 36 representing direction and letting a genetic search establish which is the more advantageous starting direction for the elevator. A decoding unit 32, using the code book, reduces the chromosomes generated by the genetic algorithm during the genetic search into a form understood by the elevator model. Upon completion of the genetic search, an executive unit fetches the solution chromosome from the GA (genetic algorithm) kernel 38 and uses the decoding function. As a result, the decoding unit sets into the elevator data fields of the unallocated passengers the elevator cars indicated by the solution thus produced. Finally, for each unallocated passenger, the executive unit 39 sends an "allocated passenger^ message as described in the previous paragraph. The position of the gene in the chromosome defines the identity of the passenger, and the value of the gene defines the elevator car assigned to serve the passenger. The direction genes for idle elevators may be encoded e. g. next to the passenger genes at the end of the chromosome. The sequence of the genes has in itself no importance because the code book describes the types and properties of the genes. Cars are not associated with elevators until in the elevator model.

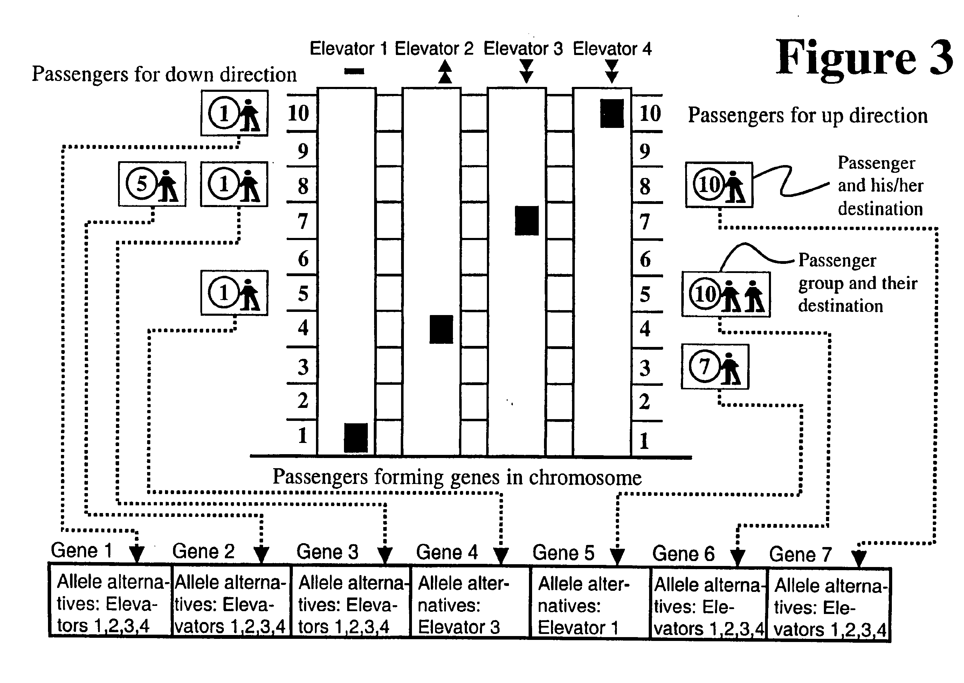

Fig. 3 presents an example illustrating the generation of chromosomes and their genes in the passenger allocation procedure. The building used as an example in this figure has ten floors and four single-car elevators, the identifying numbers and directions of which are indicated above each hoistway. The positions of the elevators in the respective hoistways are as follows: elevator 1 is at the bottom floor 1, elevator 2 is at floor 4, elevator 3 is at floor 7 and elevator 4 is at floor 10. The passengers and the destination floors given by them are shown to the right or to the left of the elevator group, depending on the traveling direction. Passengers having given a down call are depicted to the left of the elevator group. In the example, their number is four. A passenger having issued a call from the top floor 10 wants a ride to the bottom floor 1. From floor 8, two down calls have been entered, one for floor 5 and the other for floor 1. A passenger on floor 5 wants a ride to floor 1. In a corresponding manner, passengers with a destination in the up direction are depicted to the right of the elevator group. On floor 3, there is one passenger whose destination is floor 7.

On floor 5, two passengers want a ride to floor 10, which is also the destination of a passenger on floor 8. The example includes both unallocated and allocated passengers. In the down direction, the passenger on floor 5 has been allocated to elevator 3. The other passengers are unallocated. Similarly, of the passengers having issued an up call, the passenger on floor 3 has been allocated to elevator 1 while the others are unallocated.

The leading principle in generating a chromosome is that each passenger having issued a call from a floor corresponds to a gene, and the value of the gene, i. e. allele, determines which elevator car is to serve each individual passenger. Moreover, passengers waiting on the same floor and having the same destination can treated as a single gene, i. e. as a special passenger group gene. Just as the value of a gene representing a single passenger, i. e. a passenger gene, refers to the elevator car assigned to serve him/her, the value of a possible passenger group gene similarly indicates the elevator car to serve them. An example of a passenger group gene is seen at floor 5, where the passenger group gene contains two passengers who both have the same destination floor 10. A passenger group can be formed if on a floor there are passengers with the same destination.

In the example, the formation of the chromosome is presented below the elevator group. The arrows starting from the passengers on different floors and from the passenger group on floor 5 point to the positions of the corresponding genes in the chromosome. In the chromosome, the passengers wanting a downward ride are arranged in a descending order by the floor of departure, placed before the passengers wanting an upward ride, who are arranged in an ascending order according to the floor of departure. Thus, the passenger on floor 10 is represented by the first gene in the chromosome, which is followed by the genes representing the passengers with downward destinations on floor 8. For these two passengers on floor 8, no group gene has been formed because they have different destinations. The fourth gene represents the passenger on floor 5 who wants a down-ride. The fifth gene is the upward-destined passenger on floor 3. The sixth gene is a passenger group gene combining the two passengers on floor 5 whose destination is floor 10 into a single gene. The passenger group gene is followed by a seventh gene, which represents the upward-destined passenger on floor 8. The order of the genes in relation to each other has in itself no importance because the position of the gene in the chromosome can be coded freely to individualize the gene.

The number of genes in Fig. 3 may vary from 5 to 8, depending on how the passengers on floor 5 who have the same destination are treated and on whether the allocated passengers are included in the chromosome structure. The two passengers on floor 5 who want a ride to floor 10 can be combined into a single passenger group gene, or alternatively each passenger can be treated independently, in which case the chromosome structure will contain a separate gene corresponding to each of the two passengers. Depending on the mode of treatment selected, there will be either one or two genes corresponding to them in the chromosome structure.

In the example presented in the figure, there are two passengers for whom an elevator car has been allocated during a previous round of allocation, but for the other passengers in this case suitable elevators have to be found. The passenger on floor 5 has been allocated to elevator 3. Similarly, the passenger on floor 3 has been allocated to elevator 1. Therefore, the genes corresponding to these passengers have only one possible value, which in the case of the passenger on floor 5 means elevator 3 and in the case of the passenger on floor 3, elevator 1. Since no elevator car has been allocated for the other passengers, the genes corresponding to these have four potential elevator alternatives, i.e. elevators 1, 2, 3 and 4. As the elevators serving the passengers on floors 3 and 5 are known already and remain unchanged in the decision-making procedure, they need not necessarily be included in the final chromosome structure; instead, they can be taken directly to the elevator model as a part of the routes of the elevators concerned. This has the effect that these passengers on floors 3 and 5 are still taken into account in the decision-making procedure even if the genes in question are not included in the actual chromosome structure.

As the chromosome structure deals with elevator cars, the method is also applicable for use in elevator groups which may comprise single-car and/or multi-car elevators.

The invention is not restricted to the examples of its embodiments described above; instead, many variations are possible within the scope defined in the claims.

## Claims

1. Method for allocating passengers in an elevator group comprising several elevator cars, in which method each passenger gives his/her destination floor via a floor call input device (12) on his/her floor of departure, the floors of departure and destination of the passenger being thus defined, whereby
- the call input device (12) generates from it a new passenger message, which is transmitted to the control system of the elevator group, which passenger message contains the following data: device identification + floor of departure + entry side + destination floor + exit side and which passenger message is processed in a passenger recording unit (16) which keeps records of passengers and passenger data whereby the passenger recording unit (16) includes in an arriving information an unambiguous passenger identifier, time and elevator data and stores these data: passenger identifier + floor of departure + entry side + destination floor + exit side + time of arrival of passenger at floor of departure; next the passenger recording unit (16) starts a passenger allocation procedure by sending a message "perform allocation", whereby a passenger allocation unit (18) asks the passenger recording unit (16) to give all passengers in the system together with the passenger data; next, it starts a search to find an elevator car for each passenger not yet allocated, i.e. a passenger for whom no elevator car has been assigned; once the passenger allocation unit has decided which elevator car is to serve each unallocated passenger, it will send an "allocated passenger" message for each passenger to the passenger re cording unit (16), which "allocated passenger" message contains information indicating the elevator car to serve the passenger: passenger identifier + elevator + car + estimated time of arrival of elevator car at floor of departure, whereafter the passenger recording unit (16) updates the data regarding the elevator car reserved for serving the passenger in question; now the passenger recording unit (16) sends the call input device (12) a "Your transport" message, which tells the passenger via a display device (14) the elevator car to serve him/her and possibly an estimated time of arrival of the elevator, whereby data indicating which elevator car is going to serve the passenger is also transmitted to the elevator (19 having the car in question; the elevator (19) keeps its own books about passengers; which elevator has two lists for passengers; one of the lists contains the passengers who are going to enter the car, and the other list contains the passengers currently in the car; a new allocated passenger is first added to the list of passengers waiting to enter the car, and at the same time, the passenger's floor of departure is registered as a stopping floor along the route of the elevator; when the elevator stops at a floor, it goes through its two passenger lists, and the passenger is transferred from the list of passengers wanting to enter the car to the list of passengers currently in the car if (a) the floor at which the elevator has stopped is the same as the passenger's floor of departure and (b) the elevator is able to continue in the direction toward the passenger's destination floor, in which case, the elevator (19) will send a "passenger onboard" message: Passenger identifier + time of entrance of passenger into car; at the same time, the elevator sets the destination floor of the passengers having just entered the car as a future stopping floor in its service sequence; the passenger recording unit (16) updates the passenger's time of entrance into the elevator car with the data of the "passenger onboard" message; when the elevator stops at a floor, it checks its list of passengers onboard the elevator car, and the passenger is removed from this list if the stopping floor is the same as the passenger's destination floor, now the elevator sends a "passenger at destination" message : passenger identifier + passenger's time of arrival at destination floor; the passenger recording unit updates the passenger's time of arrival at destination floor with the data of the "passenger at destination" message, and finally, the passenger recording unit (16) removes the passenger from its own lists and sends information regarding the passenger to a statistics unit collecting statistics in a "passenger served" message, which thus contains complete updated passenger data: passenger identifier + floor of departure + entry side + destination floor + exit side + time of arrival of passenger at floor of departure + time of passenger's entrance into car + time of arrival of passenger at destination floor + elevator + car + time of arrival of elevator car at floor of departure; said allocation unit (18) uses a genetic call allocation method, in which allocation method
- genes are generated whereby each gene corresponds to each passenger having issued a call from a floor, and the value of the gene, i.e. allele, determines which elevator car is to serve each individual passenger,
the routes of the elevators are encoded into alternative chromosomes, and the required data regarding the passenger and elevator car being recorded in a gene in the chromosome, whereby the position of the gene in the chromosome defines the identity of the passenger, and wherein representative solution alternatives are developed in the form of chromosome and the quality of these chromosomes as an allocation decision is determined and the best of these chromosomes is selected,
whereafter the passengers indicated by the chromosomes are directed into the elevator cars represented by the best chromosome, and the elevator cars indicated by the best chromosome are directed to serve the passengers recorded in the best chromosome.

2. Method according to claim 1, **characterized in that** the decision of the quality of the alternative chromosomes is made on the base of passenger waiting time, riding time, travelling time or a combination of these.

3. Method as defined in any one of claims 1-2, **characterized in that** the gene has multiple allele alternatives as long as the genetic algorithm is in operation.

4. Method as defined in any one of the preceding claims, **characterized in that** elevator cars fixed for passengers during previous rounds of allocation are recorded in the chromosome as genes whose allele is unchanged and represents a car already allocated for a passenger.

5. Method as defined in any one of the preceding claims, **characterized in that** the genetic allocation is performed in a GA kernel, from where an executive unit gets the elevator car selected for the passenger, which is taken to the elevator having this car as an allocated passenger.

6. Method as defined in any one of the preceding claims, **characterized in that**, once the genetic algorithm has stopped, the executive unit calls a decoding function, whereupon the elevator cars corresponding to the best chromosome are obtained from the GA kernel and placed in the elevator data fields for unallocated passengers.

7. Method as defined in any one of the preceding claim, **characterized in that** two or more passengers are treated together as a single passenger group gene.

8. Apparatus for allocating the passengers belonging to an elevator group so that each passenger is served by one of the elevator cars in the elevator group, **characterized in that** the apparatus comprises
- a floor call input device (12) defining the passenger's floors of departure and destination of the passenger,
- a passenger a passenger recording unit (16) which keeps records of passengers and passenger data whereby the passenger recording unit (16) includes in an arriving information an unambiguous passenger identifier, time and elevator data and stores these data: passenger identifier + floor of departure + entry side + destination floor + exit side + time of arrival of passenger at floor of departure; next the passenger recording unit (16) starts a passenger allocation procedure by sending a message "perform allocation", whereby a passenger allocation unit (18) asks the passenger recording unit (16) to give all passengers in the system together with the passenger data; next, it starts a search to find an elevator car for each passenger not yet allocated, i.e. a passenger for whom no elevator car has been assigned; once the passenger allocation unit has decided which elevator car is to serve each unallocated passenger, it will send an "allocated passenger" message for each passenger to the passenger re cording unit (16), which "allocated passenger" message contains information indicating the elevator car to serve the passenger: passenger identifier + elevator + car + estimated time of arrival of elevator car at floor of departure; whereafter the passenger recording unit (16) updates the data regarding the elevator car reserved for serving the passenger in question; now the passenger recording unit (16) sends the call input device (12) a "Your transport" message, which tells the passenger via a display device (14) the elevator car to serve him/her and possibly an estimated time of arrival of the elevator, whereby data indicating which elevator car is going to serve the passenger is also transmitted to the elevator (19 having the car in question; the elevator (19) keeps its own books about passengers; which elevator has two lists for passengers; one of the lists contains the passengers who are going to enter the car, and the other list contains the passengers currently in the car; a new allocated passenger is first added to the list of passengers waiting to enter the car, and at the same time, the passenger's floor of departure is registered as a stopping floor along the route of the elevator; when the elevator stops at a floor, it goes through its two passenger lists, and the passenger is transferred from the list of passengers wanting to enter the car to the list of passengers currently in the car if (a) the floor at which the elevator has stopped is the same as the passenger's floor of departure and (b) the elevator is able to continue in the direction toward the passenger's destination floor, in which case, the elevator (19) will send a "passenger onboard" message: Passenger identifier + time of entrance of passenger into car; at the same time, the elevator sets the destination floor of the passengers having just entered the car as a future stopping floor in its service sequence; the passenger recording unit (16) updates the passenger's time of entrance into the elevator car with the data of the "passenger onboard" message; when the elevator stops at a floor, it checks its list of passengers onboard the elevator car, and the passenger is removed from this list if the stopping floor is the same as the passenger's destination floor, now the elevator sends a "passenger at destination" message : passenger identifier + passenger's time of arrival at destination floor; the passenger recording unit updates the passenger's time of arrival at destination floor with the data of the "passenger at destination" message, and finally, the passenger recording unit (16) removes the passenger from its own lists and sends information regarding the passenger to a statistics unit collecting statistics in a "passenger served" message, which thus contains complete updated passenger data: passenger identifier + floor of departure + entry side + destination floor + exit side + time of arrival of passenger at floor of departure + time of passenger's entrance into car + time of arrival of passenger at destination floor + elevator + car + time of arrival of elevator car at floor of departure;
which allocation unit (18) uses a genetic call allocation method,
- an elevator model,
- means for generating genes defining the passengers and the cars serving them, whereby each gene corresponds to a passenger having issued a call from said floor call input device (12), whereby the position of the gene in the chromosome defines the identity of the passenger and the value of the gene, i.e. allele, determines which elevator car is to serve each individual passenger,
- the kernel of a genetic algorithm, i.e. a GA kernel,
- a coding unit, which coding unit fills in a code book and specifies the type of each gene and, by means of the code book, decodes the chromosomes generated by the GA kernel during a genetic search into a form understood by the elevator model, and that the apparatus comprises means for serving the passengers in accordance with the genes selected, which allocation unit is designed to issue an "allocated passenger" message indicating the car to serve the passenger to the passenger recording unit (16), which in turn communicates the selected elevator car via a display device (14) to the passenger.

9. Apparatus as defined in claim 8, **characterized in that** the apparatus comprises an executive unit, which sends for each unallocated passenger an "allocated passenger" message to the elevator having the car to which the passenger has been allocated.

10. Apparatus as defined in claim 8 and 9, **characterized in that** the elevator adds the floors of departure and destination of an allocated passenger to its route as floors to stop at.

11. Apparatus as defined in claims 8 to 10, **characterized in that** the apparatus comprises a statistics unit which compiles from individual passengers a traffic matrix for the building, i. e. the traffic flow between each pair of floors, and which compiles statistics of the quality of passenger service, which is represented by the passengers' waiting times, times spent onboard a car and travelling times.

## Patentansprüche

1. Verfahren zum Zuweisen von Passagieren in einer mehrere Aufzugskabinen aufweisenden Aufzugsgruppe, in welchem Verfahren jeder Passagier sein Zielstockwerk über eine Stockwerkrufeingabeeinrichtung (12) an seinem Abfahrtsstockwerk eingibt, womit das Abfahrtsstockwerk und das Zielstockwerk des Passagiers definiert sind, wobei
- die Rufeingabeeinrichtung (12) hieraus eine neue Passagiernachricht generiert, welche dem Steuersystem der Aufzugsgruppe übermittelt wird, welche Passagiernachricht folgende Daten enthält: Identifikation der Einrichtung + Abfahrtsstockwerk + Eingangsseite + Zielstockwerk + Ausgangsseite und welche Passagiernachricht in einer Passagieraufzeichnungseinheit (16) verarbeitet wird, welche Passagiere und Passagierdaten aufzeichnet, wobei die Passagieraufzeichnungseinheit (16) einer Ankunftsinformation eine eindeutige Passagieridentifizierung, Zeit und Aufzugsdaten hinzufügt und diese Daten speichert: Passagieridentifizierung + Abfahrtsstockwerk + Eingangsseite + Zielstockwerk + Ausgangsseite + Ankunftszeit des Passagiers am Abfahrtsstockwerk; danach startet die Passagieraufzeichnungseinheit (16) ein Passagierzuweisungsverfahren, indem sie eine Nachricht "Zuweisung durchführen" absendet, wobei eine Passagierzuweisungseinheit (18) die Passagieraufzeichnungseinheit (16) veranlasst, alle Passagiere in dem System zusammen mit den Passagierdaten zu ausgeben; danach startet sie eine Suche, um einer Aufzugskabine für jeden noch nicht zugewiesenen Passagier zu finden, d.h. einen Passagier, dem noch keine Aufzugskabine zugewiesen wurde; sobald die Passagierzuweisungseinheit entschieden hat, welche Aufzugskabine jeden noch nicht zugewiesenen Passagier bedienen soll, sendet Sie eine "Zugewiesener Passagier" Nachricht für jeden Passagier an die Passagieraufzeichnungseinheit (16), welche "Zugewiesener Passagier" Nachricht Informationen über die Aufzugskabine enthält, die den Passagier bedienen soll: Passagieridentifikation + Aufzug + Kabine + geschätzte Ankunftszeit der Aufzugskabine am Abfahrtsstockwerk; wonach die Passagieraufzeichnungseinheit (16) die Daten betreffend die für die Bedienung des fraglichen Passagiers reservierte Aufzugskabine erneuert; nun sendet die Passagieraufzeichnungseinheit (16) der Rufeingabeeinrichtung (12) eine "Dein Transport" Nachricht, welche dem Passagier über eine Anzeigeeinrichtung (14) die Aufzugskabine anzeigt, die ihn bedient und möglicherweise eine geschätzte Ankunftszeit des Aufzugs, wobei die Daten, die anzeigen, welche Aufzugskabine den Passagier bedienen wird, auch dem Aufzug (19) übermittelt werden, welcher die fragliche Kabine hat; der Aufzug (19) führt seine eigenen Aufzeichnungen über Passagiere; welcher Aufzug zwei Listen für Passagiere hat; eine der Listen enthält die Passagiere, die im Begriff sind, die Kabine betreten, und die andere Liste enthält die Passagiere, die sich aktuell in der Kabine befinden; ein neuer zugewiesener Passagier wird zuerst der Liste der Passagiere hinzugefügt, die darauf warten, die Kabine zu betreten, und gleichzeitig wird das Abfahrtsstockwerk des Passagiers als Stoppstockwerk entlang der Route des Aufzugs registriert; wenn der Aufzug an einem Stockwerk stoppt, geht er durch seine zwei Passagierlisten, und der Passagier wird überführt von der Liste der Passagiere, die die Kabine betreten wollen, in die Liste der Passagiere, die sich aktuell in der Kabine befinden, wenn a) das Stockwerk, an welchem der Aufzug gestoppt hat, das gleiche ist wie das Abfahrtsstockwerk des Passagiers ist, und b) der Aufzug in der Lage ist, in Richtung auf das Zielstockwerks des Passagiers weiterzufahren, in welchem Fall der Aufzug (19) eine "Passagier an Bord" Nachricht sendet: Passagieridentifikation + Zeit des Betretens der Kabine durch den Passagier; gleichzeitig setzt der Aufzug das Zielstockwerk der Passagiere, die gerade die Aufzugskabine betreten haben, als zukünftige Stoppstockwerke in seiner Servicesequenz; die Passagieraufzeichnungseinheit (16) erneuert die Zeit des Betretens des Passagiers in die Aufzugskabine mit den Daten der "Passagier an Bord" Nachricht; wenn der Aufzug an einem Stockwerk stoppt, überprüft er seine Liste der an Bord befindlichen Passagiere, und der Passagier wird von dieser Liste entfernt, wenn das Stoppstockwerk das gleiche ist wie das Zielstockwerk des Passagiers, nun sendet der Aufzug eine "Passagier am Ziel" Nachricht: Passagieridentifizierung + Ankunftszeit des Passagiers am Zielstockwerk; die Passagieraufzeichnungseinheit erneuert die Passagierankunftszeit am Zielstockwerk mit den Daten der "Passagier am Ziel" Nachricht, und schließlich entfernt die Passagieraufzeichnungseinheit (16) den Passagier von seinen eigenen Listen und sendet passagierbezogene Informationen zu einer statistischen Einheit, die Statistiken in einer "Bediente Passagiere" Nachricht sammelt, welche somit die gesamten erneuerten Passagierdaten enthält: Passagieridentifikation + Abfahrtsstockwerk + Eintrittsseite + Zielstockwerk + Ausgangsseite + Ankunftszeit des Passagiers am Abfahrtsstockwerk + Zeit des Eintritts des Passagiers in die Kabine + Ankunftszeit des Passagiers am Zielstockwerk + Aufzug + Kabine + Zeit der Ankunft der Aufzugskabine am Abfahrtsstockwerk; die Zugweisungseinheit (18) verwendet ein genetisches Rufzuweisungsverfahren, in welchem Zuweisungsverfahren
- Gene generiert werden, wobei jedes Gen jedem Passagier entspricht, der von einem Stockwerk einen Ruf abgegeben hat, und der Wert des Gens, d. h. das Allel bestimmt,
welche Aufzugskabine jeden einzelnen Passagier bedient,
die Routen des Aufzugs werden in alternative Chromosome kodiert und die erforderlichen Daten bezüglich des Passagiers und der Aufzugskabine werden in einem Gen in dem Chromosom aufgenommen, wobei die Position des Gens in dem Chromosom die Identität des Passagiers identifiziert, und worin repräsentative Lösungsalternativen in der Form von Chromosomen entwickelt werden, und die Qualität dieser Chromosomen als eine Zuweisungslösung festgestellt wird und das Beste dieser Chromosomen ausgewählt wird,
wonach die Passagiere die durch die Chromosomen angezeigt werden, in die Aufzugskabinen geleitet werden, die durch das besten Chromosom repräsentiert werden, und die Aufzugskabinen, die von dem Besten Chromosom angezeigt werden, dazu veranlasst werden, die in dem besten Chromosom aufgezeichneten Passagiere zu bedienen.

2. Verfahren nach Anspruch 1, **dadurch gekennzeichnet, dass** die Entscheidung über die Qualität der alternativen Chromosomen auf der Basis der Passagierwartezeit, Fahrzeit, Gesamtfahrzeit oder einer Kombination dieser Daten getroffen wird.

3. Verfahren nach einem der Ansprüche 1 - 2, **dadurch gekennzeichnet, dass** das Gen multiple Allelalternativen hat, solang der genetische Algorithmus läuft.

4. Verfahren nach einem der vorhergehenden Ansprüche, **dadurch gekennzeichnet, dass** Aufzugskabinen, die für Passagiere während früherer Zuweisungsrunden festgelegt worden sind, in dem Chromosom als Gene aufgenommen werden, deren Allele unverändert sind und eine Kabine repräsentieren, die bereits einem Passagier zugewiesen wurde.

5. Verfahren nach einem der vorhergehenden Ansprüche, **dadurch gekennzeichnet, dass** die genetische Zuweisung in einem GA-Kern durchgeführt wird, von wo eine Ausführungseinheit die für den Passagier ausgewählte Aufzugskabine erhält, welche dem Aufzug zugeführt wird, dessen Kabine dem Passagier zugewiesen wurde.

6. Verfahren nach einem der vorhergehenden Ansprüche, **dadurch gekennzeichnet dass**, sobald der genetische Algorithmus gestoppt hat, die Ausführungseinheit eine Dekodierfunktion aufruft, woraufhin die Aufzugskabinen entsprechend dem besten Chromosom von dem GA-Kern erhalten werden und in den Aufzugdatenfeldern für noch nicht zugewiesene Passagiere angeordnet werden.

7. Verfahren nach einem der vorhergehenden Ansprüche, **dadurch gekennzeichnet dass**, zwei oder mehrere Passagiere zusammen als ein einzelnes Passagiergruppen-Gen behandelt werden.

8. Vorrichtung zum Zuweisen der Passagiere, die zu einer Aufzugsgruppe gehören, sodass jeder Passagier durch eine der Aufzugskabinen in der Aufzugsgruppe bedient wird, **dadurch gekennzeichnet, dass** die Vorrichtung folgende Merkmale enthält:
- eine Stockwerkrufeingabeeinrichtung (12), die das Abfahrtsstockwerk des Passagiers als auch das Ziel des Passagiers definiert,
- eine Passagieraufzeichnungseinheit (16) welche Passagiere und Passagierdaten aufzeichnet, wobei die Passagieraufzeichnungseinheit (16) einer Ankunftsinformation eine eindeutige Passagieridentifizierung, Zeit und Aufzugsdaten hinzufügt und diese Daten speichert: Passagieridentifizierung + Abfahrtsstockwerk + Eingangsseite + Zielstockwerk + Ausgangsseite + Ankunftszeit des Passagiers am Abfahrtsstockwerk; danach startet die Passagieraufzeichnungseinheit (16) ein Passagierzuweisungsverfahren, indem sie eine Nachricht "Zuweisung durchführen" absendet, wobei eine Passagierzuweisungseinheit (18) die Passagieraufzeichnungseinheit (16) veranlasst, alle Passagiere in dem System zusammen mit den Passagierdaten zu ausgeben; danach startet sie eine Suche, um einer Aufzugskabine für jeden noch nicht zugewiesenen Passagier zu finden, d.h. einen Passagier, dem noch keine Aufzugskabine zugewiesen wurde; sobald die Passagierzuweisungseinheit entschieden hat, welche Aufzugskabine jeden noch nicht zugewiesenen Passagier bedienen soll, sendet Sie eine "Zugewiesener Passagier" Nachricht für jeden Passagier an die Passagieraufzeichnungseinheit (16), welche "Zugewiesener Passagier" Nachricht Informationen über die Aufzugskabine enthält, die den Passagier bedienen soll: Passagieridentifikation + Aufzug + Kabine + geschätzte Ankunftszeit der Aufzugskabine am Abfahrtsstockwerk; wonach die Passagieraufzeichnungseinheit (16) die Daten betreffend die für die Bedienung des fraglichen Passagiers reservierte Aufzugskabine erneuert; nun sendet die Passagieraufzeichnungseinheit (16) der Rufeingabeeinrichtung (12) eine "Dein Transport" Nachricht, welche dem Passagier über eine Anzeigeeinrichtung (14) die Aufzugskabine anzeigt, die ihn bedient und möglicherweise eine geschätzte Ankunftszeit des Aufzugs, wobei die Daten, die anzeigen, welche Aufzugskabine den Passagier bedienen wird, auch dem Aufzug (19) übermittelt werden, welcher die fragliche Kabine hat; der Aufzug (19) führt seine eigenen Aufzeichnungen über Passagiere; welcher Aufzug zwei Listen für Passagiere hat; eine der Listen enthält die Passagiere, die im Begriff sind, die Kabine betreten, und die andere Liste enthält die Passagiere, die sich aktuell in der Kabine befinden; ein neuer zugewiesener Passagier wird zuerst der Liste der Passagiere hinzugefügt, die darauf warten, die Kabine zu betreten, und gleichzeitig wird das Abfahrtsstockwerk des Passagiers als Stoppstockwerk entlang der Route des Aufzugs registriert; wenn der Aufzug an einem Stockwerk stoppt, geht er durch seine zwei Passagierlisten, und der Passagier wird überführt von der Liste der Passagiere, die die Kabine betreten wollen, in die Liste der Passagiere, die sich aktuell in der Kabine befinden, wenn a) das Stockwerk, an welchem der Aufzug gestoppt hat, das gleiche ist wie das Abfahrtsstockwerk des Passagiers ist, und b) der Aufzug in der Lage ist, in Richtung auf das Zielstockwerks des Passagiers weiterzufahren, in welchem Fall der Aufzug (19) eine "Passagier an Bord" Nachricht sendet: Passagieridentifikation + Zeit des Betretens der Kabine durch den Passagier; gleichzeitig setzt der Aufzug das Zielstockwerk der Passagiere, die gerade die Aufzugskabine betreten haben, als zukünftige Stoppstockwerke in seiner Servicesequenz; die Passagieraufzeichnungseinheit (16) erneuert die Zeit des Betretens des Passagiers in die Aufzugskabine mit den Daten der "Passagier an Bord" Nachricht; wenn der Aufzug an einem Stockwerk stoppt, überprüft er seine Liste der an Bord befindlichen Passagiere, und der Passagier wird von dieser Liste entfernt, wenn das Stoppstockwerk das gleiche ist wie das Zielstockwerk des Passagiers, nun sendet der Aufzug eine "Passagier am Ziel" Nachricht: Passagieridentifizierung + Ankunftszeit des Passagiers am Zielstockwerk; die Passagieraufzeichnungseinheit erneuert die Passagierankunftszeit am Zielstockwerk mit den Daten der "Passagier am Ziel" Nachricht, und schließlich entfernt die Passagieraufzeichnungseinheit (16) den Passagier von seinen eigenen Listen und sendet passagierbezogene Informationen zu einer statistischen Einheit, die Statistiken in einer "Bediente Passagiere" Nachricht sammelt, welche somit die gesamten erneuerten Passagierdaten enthält: Passagieridentifikation + Abfahrtsstockwerk + Eintrittsseite + Zielstockwerk + Ausgangsseite + Ankunftszeit des Passagiers am Abfahrtsstockwerk + Zeit des Eintritts des Passagiers in die Kabine + Ankunftszeit des Passagiers am Zielstockwerk + Aufzug + Kabine + Zeit der Ankunft der Aufzugskabine am Abfahrtsstockwerk; wobei die Zugweisungseinheit (18) ein genetisches Rufzuweisungsverfahren verwendet,
- ein Aufzugsmodel,
- Mittel zum Generieren von Genen, die die Passagiere und die diese bedienende Kabinen definieren, wobei jedes Gen einem Passagier entspricht, der einen Ruf von der Stockwerkrufeingabeeinrichtung (12) abgegeben hat, wobei die Position des Genes in dem Chromosom die Identität des Passagiers definiert und der Wert des Gens, d. h. Allel bestimmt, welche Aufzugskabine jeden einzelnen Passagier bedienen soll,
- den Kern eines genetischen Algorithmus, d. h. einen GA-Kern,
- eine Kodiereinheit, welche Kodiereinheit ein Kodierungsbuch ausfüllt und den Typ jedes Gens spezifiziert und, mittels des Kodierungsbuches die Chromosomen dekodiert, die durch den GA-Kern während einer genetischen Suche in eine Form generiert wird, die von dem Aufzugsmodel verstanden wird, und dass die Vorrichtung Mittel zum Bedienen der Passagiere in Übereinstimmung mit den ausgewählten Genen enthält, welche Zuweisungseinheit dazu konzipiert ist, eine "Zugewiesener Passagier" Nachricht abzugeben, die die Kabine, welche den Passagier bedienen soll, der Passagieraufzeichnungseinheit (16) anzeigt, welche wiederum die ausgewählte Aufzugskabine mittels einer Anzeigeeinrichtung (14) dem Passagier anzeigt.

9. Vorrichtung nach Anspruch 8, **dadurch gekennzeichnet, dass** die Vorrichtung eine Ausführungseinheit enthält, welche demjenigen Aufzug, der die Aufzugskabine hat, welcher der Passagier zugewiesen worden ist, für jeden nicht zugewiesenen Passagier eine "Zugewiesener Passagier" Nachricht übermittelt..

10. Vorrichtung nach Anspruch 8 und 9, **dadurch gekennzeichnet, dass** der Aufzug das Abfahrts- und Zielstockwerk eines zugewiesenen Passagiers seiner Route als Stoppstockwerke hinzufügt.

11. Vorrichtung nach den Ansprüchen 8 bis 10, **dadurch gekennzeichnet, dass** die Vorrichtung eine Statistikeinheit aufweist, die von individuellen Passagieren eine Verkehrsmatrix für das Gebäude erarbeitet, d. h. den Verkehrsfluss zwischen jedem Stockwerkspaar, und welches die Statistiken der Qualität des Passagierservice erarbeitet, welche durch die Passagierwartezeiten, Zeit an Bord der Kabine und Gesamtfahrtzeiten repräsentiert wird.

## Revendications

1. Procédé d'affectation de passagers dans un groupe d'ascenseurs comprenant plusieurs cabines d'ascenseur, dans lequel procédé chaque passager indique son étage de destination par le biais d'un dispositif de saisie d'appel d'étage (12) à son étage de départ, les étages de départ et de destination du passager étant ainsi définis :
- le dispositif de saisie d'appel d'étage (12) génère un nouveau message passager, qui est transmis au système de commande du groupe d'ascenseurs, lequel message passager contient les données suivantes :
identification du dispositif + étage de départ + côté d'accès + étage de destination + côté de sortie
et lequel message passager est traité dans une unité d'enregistrement des passagers (16) qui conserve les enregistrements des passagers et des données passagers, l'unité d'enregistrement des passagers (16) contenant dans une information entrante un identifiant passager univoque, l'heure et les données d'ascenseur et stocke ces données
identifiant passager + étage de départ + coté d'entrée + étage de destination + côté de sortie + heure d'arrivée du passager à l'étage de départ :
puis l'unité d'enregistrement des passagers (16) démarre un processus d'affectation des passagers en envoyant un message "exécution d'affectation",
une unité d'affectation des passagers (18) demandant à l'unité d'enregistrement des passagers (16) d'entrer tous les passagers dans le système conjointement avec les données de passagers ; ensuite, il commence une recherche pour trouver une cabine d'ascenseur pour chaque passager pas encore affecté, c'est-à-dire les passagers auxquels aucune cabine d'ascenseur n'a été attribuée ; une fois que l'unité d'affectation des passagers a décidé quelle cabine d'ascenseur doit desservir chaque passager non affecté, elle enverra à l'unité d'enregistrement des passagers (16) un message "passager affecté" pour chaque passager, lequel message "passager affecté" contient des informations indiquant la cabine d'ascenseur devant desservir le passager :
identifiant passager + ascenseur + cabine + estimation de l'heure d'arrivée de la cabine d'ascenseur à l'étage de départ ;
après quoi l'unité d'enregistrement des passagers (16) actualise les données concernant la cabine d'ascenseur réservée pour desservir le passager en question ; maintenant l'unité d'enregistrement des passagers (16) envoie au dispositif de saisie d'appel (12) un message "Votre transport", qui indique au passager par le biais d'un dispositif d'affichage (14) la cabine d'ascenseur devant le desservir et si possible une estimation de l'heure d'arrivée de l'ascenseur, les données indiquant laquelle des cabines d'ascenseur va desservir le passager étant également transmises à l'ascenseur (19) disposant de la cabine en question ; l'ascenseur (19) conserve ses propres registres relatifs aux passagers ; lequel ascenseur ayant deux listes de passagers ; une des listes contenant les passagers qui vont pénétrer dans la cabine, et l'autre liste contenant les passagers actuellement dans la cabine ; un nouveau passager affecté étant d'abord ajouté à la liste de passagers attendant de pénétrer dans la cabine, et simultanément l'étage de départ du passager étant enregistré comme un étage d'arrêt au cours de l'itinéraire de l'ascenseur ; quand l'ascenseur s'arrête à un étage, il parcourt ses deux listes de passagers, et le passager est transféré de la liste de passagers voulant pénétrer dans la cabine à la liste de passagers actuellement dans la cabine si (a) l'étage auquel l'ascenseur s'est arrêté est le même que l'étage de départ du passager et (b) l'ascenseur est apte à continuer en direction de l'étage de destination du passager, auquel cas l'ascenseur (19) enverra un message "passager à bord" :
identifiant passager + heure d'entrée du passager dans la cabine ;
simultanément, l'ascenseur définit l'étage de destination des passagers ayant juste pénétré dans la cabine comme un futur étage d'arrêt dans sa séquence de service ; l'unité d'enregistrement des passagers (16) actualise l'heure d'entrée des passagers dans la cabine d'ascenseur avec les données du message "passager à bord" ; quand l'ascenseur s'arrête à un étage, il contrôle sa liste de passagers à bord de la cabine d'ascenseur, et le passager est retiré de cette liste si l'étage d'arrêt est le même que l'étage de destination du passager, maintenant l'ascenseur envoie un message "passager à destination" :
identifiant passager + heure d'arrivée du passager à l'étage de destination ;
l'unité d'enregistrement des passagers actualise l'heure d'arrivée du passager à l'étage de destination avec les données du message "passager à destination", et enfin, l'unité d'enregistrement des passagers (16) retire le passager de ses propres listes et envoie des informations concernant le passager à une unité de statistiques récupérant les statistiques dans un message "passager desservi", qui contient ainsi la totalité des données du passager actualisées :
identifiant passager + étage de départ + côté d'entrée + étage de destination + côté de sortie + heure d'arrivée du passager à l'étage de départ + heure d'entrée du passager dans la cabine + heure d'arrivée du passager à l'étage de destination + ascenseur + cabine + heure d'arrivée de la cabine d'ascenseur à l'étage de départ ;
ladite unité d'affectation (18) utilise un procédé d'affectation d'appel génétique, dans lequel procédé d'affectation
- des gènes sont générés, chaque gène correspondant à chaque passager ayant émis un appel à partir d'un étage, et la valeur du gène, c'est-à-dire l'allèle, détermine quelle cabine d'ascenseur doit desservir chaque passager individuel, les itinéraires des ascenseurs sont codés en chromosomes alternatifs, et les données nécessaires concernant le passager et la cabine d'ascenseur étant enregistrées dans un gène dans le chromosome, la position du gène dans le chromosome définissant l'identité du passager, et dans laquelle solution représentative des alternatives sont développées sous la forme de chromosomes et la qualité de ces chromosomes en tant que décision d'affectation est déterminée et le meilleur des chromosomes est sélectionné,
après quoi les passagers indiqués par les chromosomes sont orientés vers les cabines d'ascenseur représentées par le meilleur chromosome, et les cabines d'ascenseur indiquées par le meilleur chromosome sont orientées pour desservir les passagers enregistrés dans le meilleur chromosome.

2. Procédé selon la revendication 1, **caractérisé par le fait que** la décision de la qualité des chromosomes alternatifs est prise sur la base du temps d'attente des passagers, du temps de présence dans la cabine, du temps de trajet ou d'une combinaison de ceux-ci.

3. Procédé selon l'une quelconque des revendications 1 à 2, **caractérisé par le fait que** le gène a de multiples allèles de remplacement tant que l'algorithme génétique est en service.

4. Procédé selon l'une quelconque des revendications précédentes, **caractérisé par le fait que** les cabines d'ascenseur déterminées pour des passagers pendant des séries d'affectation précédentes sont enregistrées dans le chromosome en tant que gènes dont l'allèle est inchangée et représente une cabine déjà affectée à un passager.

5. Procédé selon l'une quelconque des revendications précédentes, **caractérisé par le fait que** l'affectation génétique est réalisée dans un noyau d'algorithme génétique, à partir duquel une unité d'exécution se procure la cabine d'ascenseur sélectionnée pour le passager, qui est amenée à l'ascenseur ayant cette cabine en tant que passager affecté.

6. Procédé selon l'une quelconque des revendications précédentes, **caractérisé par le fait que**, une fois que l'algorithme génétique s'est arrêté, l'unité d'exécution appelle une fonction de décodage, après quoi les cabines d'ascenseur correspondant au meilleur chromosome sont obtenues par le noyau d'algorithme génétique et placées dans les champs de données de l'ascenseur pour les passagers non affectés.

7. Procédé selon l'une quelconque des revendications précédentes, **caractérisé par le fait que** deux passagers ou plus peuvent être traités ensemble comme étant un unique gène de groupe de passagers.

8. Appareil d'affectation des passagers appartenant au groupe d'ascenseurs de telle sorte que chaque passager est desservi par une des cabines d'ascenseur dans le groupe d'ascenseurs, **caractérisé par le fait que** l'appareil comporte
- un dispositif de saisie d'appel d'étage (12) définissant les étages de départ et de destination du passager,
- une unité d'enregistrement des passagers (16) qui conserve les enregistrements des passagers et des données passagers, l'unité d'enregistrement des passagers (16) contenant dans une information entrante un identifiant de passager univoque, l'heure et les données d'ascenseur et stockant ces données :
identifiant passager + étage de départ + coté d'entrée + étage de destination + côté de sortie + heure d'arrivée du passager à l'étage de départ :
puis l'unité d'enregistrement des passagers (16) démarre un processus d'affectation des passagers en envoyant un message "exécution d'affectation",
une unité d'affectation des passagers (18) demandant à l'unité d'enregistrement des passagers (16) d'entrer tous les passagers dans le système conjointement avec les données de passagers ; ensuite, il commence une recherche pour trouver une cabine d'ascenseur pour chaque passager qui n'est pas encore affecté, c'est-à-dire un passager pour lequel aucune cabine d'ascenseur n'a été attribuée ; une fois que l'unité d'affectation des passagers a décidé quelle cabine d'ascenseur doit desservir chaque passager non affecté, elle enverra à l'unité d'enregistrement des passagers (16) un message "passager affecté" pour chaque passager, lequel message "passager affecté" contient des informations indiquant la cabine d'ascenseur devant desservir le passager :
identifiant passager + ascenseur + cabine + estimation de l'heure d'arrivée de la cabine d'ascenseur à l'étage de départ ;
après quoi l'unité d'enregistrement des passagers (16) actualise les données concernant la cabine d'ascenseur réservée pour desservir le passager en question ; maintenant l'unité d'enregistrement des passagers (16) envoie au dispositif de saisie d'appel (12) un message "Votre transport", qui indique au passager par le biais d'un dispositif d'affichage (14) la cabine d'ascenseur devant le desservir et si possible une estimation de l'heure d'arrivée de l'ascenseur, les données indiquant laquelle des cabines d'ascenseur va desservir le passager étant également transmises à l'ascenseur (19) disposant de la cabine en question ; l'ascenseur (19) conserve ses propres registres relatifs aux passagers ; lequel ascenseur ayant deux listes de passagers ; une des listes contenant les passagers qui vont pénétrer dans la cabine, et l'autre liste contenant les passagers actuellement dans la cabine ; un nouveau passager affecté est d'abord ajouté à la liste de passagers attendant de pénétrer dans la cabine, et simultanément l'étage de départ du passager est enregistré comme étant un étage d'arrêt au cours de l'itinéraire de l'ascenseur, quand l'ascenseur s'arrête à un étage, il parcourt ses deux listes de passagers, et le passager est transféré de la liste de passagers voulant pénétrer dans la cabine à la liste de passagers actuellement dans la cabine si (a) l'étage auquel l'ascenseur s'est arrêté est le même que l'étage de départ du passager et (b) l'ascenseur est apte à continuer en direction de l'étage de destination du passager, auquel cas l'ascenseur (19) enverra un message "passager à bord" :
identifiant passager + heure d'entrée du passager dans la cabine ;
simultanément, l'ascenseur définit l'étage de destination des passagers ayant juste pénétré dans la cabine comme un futur étage d'arrêt dans sa séquence de service ; l'unité d'enregistrement des passagers (16) actualise l'heure d'entrée des passagers dans la cabine d'ascenseur avec les données du message "passager à bord" ; quand l'ascenseur s'arrête à un étage, il contrôle sa liste de passagers à bord de la cabine d'ascenseur, et le passager est retiré de cette liste si l'étage d'arrêt est le même que l'étage de destination du passager, maintenant l'ascenseur envoie un message "passager à destination" :
identifiant passager + heure d'arrivée du passager à l'étage de destination ;
l'unité d'enregistrement des passagers actualise l'heure d'arrivée du passager à l'étage de destination avec les données du message "passager à destination", et enfin, l'unité d'enregistrement des passagers (16) retire le passager de ses propres listes et envoie des informations concernant le passager à une unité de statistiques récupérant les statistiques dans un message "passager desservi", qui contient ainsi la totalité des données du passager actualisées :
identifiant passager + étage de départ + côté d'entrée + étage de destination + côté de sortie + heure d'arrivée du passager à l'étage de départ + heure d'entrée du passager dans la cabine + heure d'arrivée du passager à l'étage de destination + ascenseur + cabine + heure d'arrivée de la cabine d'ascenseur à l'étage de départ ;
ladite unité d'affectation (18) utilisant un procédé d'affectation d'appel génétique,
- un modèle d'ascenseur,
- un moyen destiné à générer des gènes définissant les passagers et les cabines les desservant, chaque gène correspondant à un passager ayant émis un appel depuis ledit dispositif de saisie d'appel d'étage 12, la position du gène dans le chromosome définissant l'identité du passager et la valeur du gène, c'est-à-dire l'allèle, déterminant quelle cabine d'ascenseur doit desservir chaque passager individuel,
- le noyau d'algorithme génétique,
- une unité de codage, laquelle unité de codage remplit dans un registre de codes et spécifie le type de chaque gène et, par le biais du registre de codes, décode les chromosomes générés par le noyau d'algorithme génétique pendant une recherche génétique en une forme comprise par le modèle d'ascenseur, et que l'appareil comprend un moyen destiné à desservir les passagers en fonction des gènes sélectionnés, laquelle unité d'affectation des passagers étant conçue pour émettre un message "passager affecté" indiquant à l'unité d'enregistrement des passagers (16) la cabine devant desservir le passager, qui à sont tour communique au passager la cabine d'ascenseur sélectionnée par le biais d'un dispositif d'affichage (14).

9. Appareil selon la revendication 8, **caractérisé par le fait que** l'appareil comprend une unité d'exécution, qui envoie pour chaque passager non affecté un message "passager affecté" à l'ascenseur ayant la cabine à laquelle le passager a été affecté.

10. Appareil selon les revendications 8 et 9, **caractérisé par le fait que** l'ascenseur ajoute à son itinéraire les étages de départ et de destination d'un passager affecté en tant qu'étages auxquels il doit s'arrêter.

11. Appareil selon les revendications 8 à 10, **caractérisé par le fait que** l'appareil comprend une unité statistique qui compile à partir de passagers individuels une matrice de trafic pour l'immeuble, c'est-à-dire le flux de trafic entre chaque paire d'étages, et qui compile les statistiques portant sur la qualité du service pour les passagers, représentées par les temps d'attente des passagers, les durées passées à bord d'une cabine et les durées de trajet.
